Europäisches Patentamt

European Patent Office

Office européen des brevets

(19)

(11) Veröffentlichungsnummer: **0 073 048**
**A1**

(12) # EUROPÄISCHE PATENTANMELDUNG

(21) Anmeldenummer: 82107689.0

(22) Anmeldetag: 23.08.82

(51) Int. Cl.³: **F 16 L 33/20**
**F 16 L 19/00**

(30) Priorität: 25.08.81 CH 5468/81

(43) Veröffentlichungstag der Anmeldung:
02.03.83 Patentblatt 83/9

(84) Benannte Vertragsstaaten:
AT DE FR SE

(71) Anmelder: GEORG FISCHER AKTIENGESELLSCHAFT
Mühlentalstrasse 105
CH-8201 Schaffhausen(CH)

(72) Erfinder: Hurter, Fritz
Bocksrietstrasse 108
CH-8200 Schaffhausen(CH)

(54) Vorrichtung zum Verbinden eines Kunststoffrohres mit einem Rohrstutzen.

(57) Die Verbindung eines Rohrstutzens (1) mit einem Kunststoffrohr (11) umfasst einen rohrinnenseitig bündig in den Rohrstutzen (1) eingesetzten Rohreinsatz (2), der auf der Aussenfläche einen gerillte Fläche (16) zur Anlage gegen das Kunststoffrohr (11) aufweist.

Gegen die Aussenfläche des Kunststoffrohres (11) liegt eine gerillte Fläche (17) einer Hülse (8) an, die seitlich auch direkt in den Rohreinsatz (2) eingreift und einen Längsschlitz aufweist.

In einer rillenförmigen Ausnehmung (12) mit Seitenkanten (14) liegt eine Klemmbride (13) mit einer Ausbuchtung, deren Flanken gegeneinander, zur Halterung des Kunststoffrohres (11) zusammenpressbar sind.

Fig.1

EP 0 073 048 A1

GEORG FISCHER AKTIENGESELLSCHAFT,       8201 Schaffhausen

2270/FIT / 24.8.1981 / Lg-ba /

Vorrichtung zum Verbinden eines Kunststoffrohres mit
einem Rohrstutzen

Die Erfindung betrifft eine Vorrichtung gemäss dem Oberbegriff des Anspruches 1.

Derartige Vorrichtungen werden insbesondere zum Verbinden
von Wasser- und Druckluftleitungen verwendet.

Eine Ausführung dieser Art ist z.B. in der CH-PS 593 394
beschrieben, in welcher Kunststoffrohre mit Metallrohren
verbunden sind. Bei dieser Ausführung sind dabei die
einzelnen Rohre miteinander verschraubt, was relativ
kostspielig und zeitaufwendig ist.

Bei einer weiteren Ausführung gemäss der CH-PS 589 245
wird ein Schlauch oder Rohr mittels eines Federringes
mit einem anderen Schlauch oder Rohr verbunden, wobei
der Federring mittels einer Schraube gegen den Schlauch
oder das Rohr gepresst wird.

Derartige Federringe sind teuer und erfordern einen hohen

**0073048**

- 2 -

Arbeitsaufwand für die Montage.

Aufgabe der Erfindung ist somit die Schaffung einer Vorrichtung zum Verbinden eines Kunststoffrohres mit einem Rohrstutzen, welche die Nachteile der bestehenden Ausführungen nicht aufweist.

Dabei soll die Ausführung einfach und preisgünstig sein und nicht verschraubt werden müssen.

Die Verbindung soll problemlos auch an schwer zugänglichen Montagestellen, z.B. an nahe an einer Wand anliegende Rohre, herstellbar sein.

Zur Herstellung der Verbindung sollen keine Spezialwerkzeuge erforderlich sein.

Die hergestellte Verbindung soll mit einfachen Mitteln lösbar sein.

Diese Aufgabe ist mittels der Lehre gemäss dem kennzeichnenden Teil des Anspruches 1 gelöst.

Ausführungsformen dieser Lehre sind in den weiteren, abhängigen Ansprüchen umschrieben.

Die geschaffene Lösung ist einfach und preisgünstig und schnell herstellbar.

Der Arbeitsaufwand zur Herstellung der Verbindung ist äusserst gering.

Die hergestellte Verbindung lässt sich einfach und schnell lösen.

Nachfolgend wird ein Ausführungsbeispiel der erfindungsgemässen Vorrichtung anhand der Zeichnung näher erläutert.

Es zeigen:

Fig. 1        einen Querschnitt durch eine Rohrverbindung,
              und

Fig. 2        eine Stirnansicht der in Fig. 1 benutzten
              Klemmbride.

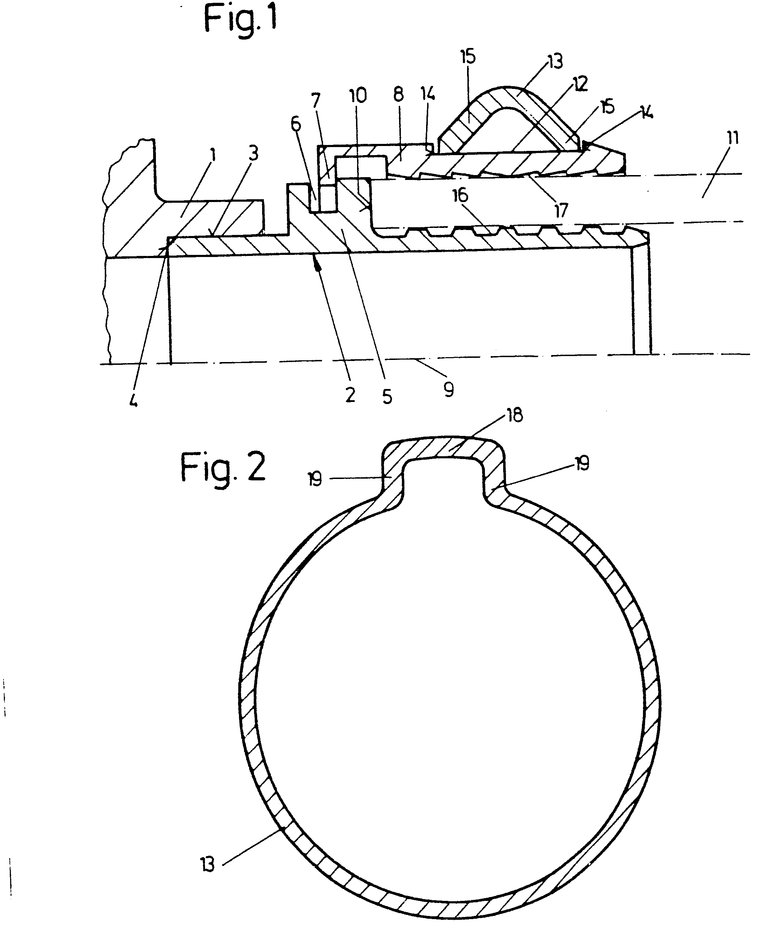

In Fig. 1 ist ein Rohrstutzen 1 eines Gehäuses, Winkels,
T-Stücks oder Rohrbogens dargestellt. Für das Einsetzen
eines Rohreinsatzes 2 ist der Rohrstutzen 1 auf der
Innenseite mit einem Abschnitt 3 mit grösserem Durchmesser versehen, damit der Rohreinsatz 2 bündig mit der
Innenfläche des Rohrstutzens 1 montiert werden kann.
Am inneren Ende des Abschnittes 3 ist ein Anschlag 4
für den Rohreinsatz 2 vorgesehen. Der Rohreinsatz 2 ist
für eine Lötverbindung mit dem Rohrstutzen 1 ausgelegt.
Es ist aber auch möglich diese zwei Teile 1, 2 miteinander zu verschrauben.

Ausserhalb des Rohrstutzens 1, weisst der Rohreinsatz 2
einen Bereich 5 mit erweitertem Durchmesser auf, in
welchem Bereich 5 sich eine Umfangsrille 6 befindet, in
die ein ringförmiger Ansatz 7 einer Hülse 8 eingreift.
Das vom Rohrstutzen 1 abliegende Ende des Bereiches 5
ist als senkrecht zur Rohrachse 9 verlaufende Wand 10
ausgebildet, die als Anschlag für ein zwischen dem Rohreinsatz 2 und der Hülse 8 einschiebbares Kunststoffrohr
11 dient.

Gegenüber dem Kunststoffrohr 11 weist die Hülse 8 aussenseitig eine rillenförmige Ausnehmung 12 zur Aufnahme einer
ringförmigen Klemmbride 13 auf. Die beiden Seitenkanten 14
dieser Ausnehmung 12 dienen zur Begrenzung der Bewegung
der beiden seitlichen Kanten 15 der Klemmbride 13. An
den dem Kunststoffrohr 11 gegenüberliegenden Flächen
16, 17 des Rohreinsatzes 2 und der Hülse 8 sind Rillen
zur Halterung des Kunststoffrohres 11 vorhanden.

Die Hülse 8 weist in der Längsrichtung einen nicht gezeigten Schlitz auf, der sich z.B. gerade oder schraubenlinienförmig erstrecken kann. Die Breite dieses Schlitzes
ist so bemessen, dass die Hülse 8 auch im zusammengepressten Zustand einen dünnen Spalt aufweist.

Zum festen Verbinden des Kunststoffrohres 11 mit dem
Rohreinsatz 2 dient die Klemmbride 13, die ausführlicher
in Fig. 2 dargestellt ist. Die Klemmbride 13 weist an
einem Teil ihres Umfanges eine Ausbuchtung 18 auf, an
deren beiden Flanken 19 eine Zange angesetzt werden kann.
Beim Betätigen der Zange werden die beiden Flanken 19
gegeneinander gedrückt, wobei die Hülse 8 zusammengeklemmt und somit das Kunststoffrohr 11 fest gegen die
Rillen 16 an der Aussenfläche des Rohreinsatzes 2 gepresst wird. In der Weise wird das Kunststoffrohr 11
zwischen dem Rohreinsatz 2 und der Hülse 8 festgehalten.

Beim Klemmvorgang greift ferner der Ansatz 7 der Hülse 8
in die Umfangsrille 6 im Rohreinsatz 2 ein.

Dadurch wird bei der vorgesehenen Beanspruchung der
Rohrverbindung verhindert, dass sich die Teile 2, 8, 11
in der Achsrichtung 9 relativ zueinander verschieben.

Die Teile 2, 8 und 13 können je nach Verwendungsbereich, Druck usw. aus verschiedenen Materialien bestehen.

Obschon die Hülse im Regelfall aus Metall besteht sind Hülsen aus Kunststoff ebenfalls verwendbar.

In der dargestellten Ausführung hat die Klemmbride ein winkelförmiges Profil. Es ist aber auch möglich andere Profile zu verwenden.

Die Hülse kann z.B. auch aus Federstahl bestehen.

Die geschaffene Ausführung ist preisgünstig und einfach und an schwer zugänglichen Stellen, auch nahe an einer Wand, für die Herstellung einer Verbindung zugänglich.

0073048

<u>P a t e n t a n s p r ü c h e</u>

2270/FIT

1. Vorrichtung zum Verbinden eines Kunststoffrohres mit
einem Rohrstutzen, in dem ein Rohreinsatz rohrinnenseitig bündig befestigt ist, dadurch gekennzeichnet, dass
der Rohreinsatz (2) aussen eine Fläche (16) zur Halterung des Kunststoffrohres (11), sowie eine Rille (6)
für einen Ansatz (7) einer radial nach innen pressbaren
Hülse (8) zum Anpressen des Kunststoffrohres (11) gegen
die Fläche (16) aufweist, und dass eine Klemmbride (13)
zum Andrücken der Hülse (8) gegen das Kunststoffrohr (11)
und zur Halterung der Hülse (8) in der Rille (6) vorhanden ist.

2. Vorrichtung nach Anspruch 1, dadurch gekennzeichnet,
dass die Innenfläche (17) der Hülse (8) und die
Aussenfläche (16) des Rohreinsatzes (2) im Anlagebereich gegen das Kunststoffrohr (2) mit Rillen
versehen sind.

3. Vorrichtung nach Anspruch 1 oder 2, dadurch gekennzeichnet, dass die Halterung der Hülse (8) aus einem
sich um den ganzen Umfang erstreckenden, nach innen
gerichteten Ansatz (7) besteht, der in eine Umfangs-

**0073048**

rille (6) im Rohreinsatz (2) eingreift.

4. Vorrichtung nach Anspruch 1, 2 oder 3, dadurch gekennzeichnet, dass die Hülse (8) einen Schlitz aufweist, der sich in deren ganzen Längsrichtung erstreckt.

5. Vorrichtung nach Anspruch 1, 2 oder 3, dadurch gekennzeichnet, dass die Klemmbride (13) eine einseitige Ausbuchtung (18) mit zwei Flanken (19) aufweist, die mittels einer Zange zusammenpressbar sind.

6. Vorrichtung nach einem der Ansprüche 1 bis 5, dadurch gekennzeichnet, dass die Klemmbride (13) in einer Ausnehmung (12) am Umfang der Hülse (8) angeordnet ist.

7. Vorrichtung nach Anspruch 6, dadurch gekennzeichnet, dass die Ausnehmung (12) durch senkrecht zur Rohrachse (9) verlaufende Seitenkanten (14) begrenzt ist, die eine Erweiterung der Klemmbride (13) über ein vorbestimmtes Mass, in der Achsrichtung, hinaus verhindert.

## Fig.1

## Fig. 2

Europäisches
Patentamt

**EUROPÄISCHER RECHERCHENBERICHT**

Nummer der Anmeldung

**0073048**

EP 82107689.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE - A - 1 946 366 (OETIKER)<br>   * Fig. 1,2 *<br>    -- | 1,2,3 | F 16 L 33/20<br>F 16 L 19/00 |
| Y | DE - A1 - 2 926 215 (CHESINI FRATELLI)<br>   * Fig. 2 *<br>    -- | 1,2,3 | |
| Y | AT - B - 343 966 (A. RIEDL)<br>   * Gesamt *<br>    -- | 1,2,3 | |
| A | DE - A1 - 2 830 217 (VOLKSWAGEN-WERK AG)<br>   * Fig. 1,2 *<br>    -- | 1,5 | |
| A | DE - A1 - 2 408 892 (CONCIN)<br>   * Fig. 1,2,4 *<br>    ---- | 1,4 | **RECHERCHIERTE SACHGEBIETE (Int. Cl. ³)**<br><br>F 16 L 19/00<br>F 16 L 25/00<br>F 16 L 33/00 |

Der vorliegende Recherchenbericht wurde für alle Patentansprüche erstellt.

| Recherchenort | Abschlußdatum der Recherche | Prüfer |
|---|---|---|
| WIEN | 12-11-1982 | SCHUGANICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82